Europäisches Patentamt

European Patent Office

Office européen des brevets

(19)

(11) Publication number: **0 446 633 A2**

(12) # EUROPEAN PATENT APPLICATION

(21) Application number: **91102000.6**

(22) Date of filing: **13.02.91**

(51) Int. Cl.5: **G06K 9/03, G06K 9/72**

(30) Priority: **12.03.90 US 491896**

(43) Date of publication of application:
**18.09.91 Bulletin 91/38**

(84) Designated Contracting States:
**DE FR GB**

(71) Applicant: **International Business Machines
Corporation
Old Orchard Road
Armonk, N.Y. 10504(US)**

(72) Inventor: **Dinan, Raymond Francis
5901 Beaver Dam Lane
Charlotte, N. C. 28227(US)**
Inventor: **Narasimha, Manthri Selvapullai
7500 Hawkstand Ln.
Charlotte, N. C. 28210(US)**
Inventor: **Neville, Richard Gibbs
Rt. 7, Box 545
Mooresville, N. C. 28115(US)**
Inventor: **Rodite, Robert R. R.
10022 Thomas Payne Circle
Charlotte, N. C. 28226(US)**

(74) Representative: **Jost, Ottokarl, Dipl.-Ing.
IBM Deutschland GmbH Intellectual Property
Dept. Schönaicher Strasse 220
W-7030 Böblingen(DE)**

(54) **Document processor including method and apparatus for identifying and correcting errors.**

(57) A method and system for identifying errors in recognition and for correcting such errors. During the recognition process, the most likely (or primary recognition) character and a second or alternative character (representing the next most likely recognition) together with a probability of the most likely character being correct. When an error is detected, as by the recognized characters on individual documents not totalling the total on a summary document, then characters with lowest probability in the correct place value are examined until the replacement of an alternate character for the most likely character allows the characters on the individual documents total the total on the summary document.

Fig. 3.

Cross Reference to Related Patents

U. S. Patent 4,876,735 by W. D. Martin et al. entitled "Method Apparatus for Character Recognition Systems", sometimes referred to as the "Probability Document Processor Patent", the specification and drawings of which are hereby incorporated herein by reference.

U. S. Patent application (Serial No. 492,461) filed March 12, 1990 by Lyke et al. entitled "Image Balancing System and Method", sometimes referred to as the "Image Balancing Patent" and specifically incorporated herein by reference.

## BACKGROUND OF THE INVENTION

### Field of Invention

The present invention relates to a method and apparatus for processing documents where indicia on the document is read as the document is moved, and a probability of correct reading is generated along with a second possible reading. Where an error in part of the readings is detected, a possible location of the error is identified and an alternate value is used.

### Background Art

Various document processors (also sometimes referred to as "reader/sorters" or "check readers" by some) have been marketed by various manufacturers. These machines move (or transport) documents from an input hopper to a selected one of a series of output receptacles (or pockets) positioned adjacent a document path, typically at a speed of from hundreds of documents per minute up to 2000 or more documents per minute. As the documents are moved, indicia on the document are read by magnetic or optical techniques. Since the documents may be moving rapidly, and since the printing on the document may be imperfect or the document may have been bent or folded, the reading of the indicia may be in error.

Various methods have been proposed to identify and/or correct the errors in reading. For example, in systems typified by US patent 3,764,978 where characters are recognized both magnetically and optically, and readings are rejected when the two systems indicate different symbols. This adds hardware and software to a system and can lead to a substantial number of reject readings.

Other techniques such as keying or verifying the amount of each item have been proposed. This obviously represents a substantial amount of additional manual labor.

Accordingly, the prior art systems have substantial limitations and disadvantages.

## SUMMARY OF THE INVENTION

The present invention overcomes the limitations and disadvantages of the prior art systems by providing a system in which recognition of a character includes not only a best recognition, but also a second best recognition and a value indicative of the confidence level (or probability of correctness).

Other objects and advantages of the present invention will be apparent to those skilled in the art, in view of the description of the invention herein taken together with the appended claims and the accompanying drawings.

## BRIEF DESCRIPTION OF THE DRAWINGS

Fig. 1    illustrates an organizational diagram of an image capture and processing system of the present invention.

Fig. 2    depicts a representation of a record format resulting from the image capture and processing system of Fig. 1.

Fig. 3    is a logic diagram depicting the logic used in identifying and correcting errors or substitutions from the recognition process.

## DETAILED DESCRIPTION OF THE PREFERRED EMBODIMENT

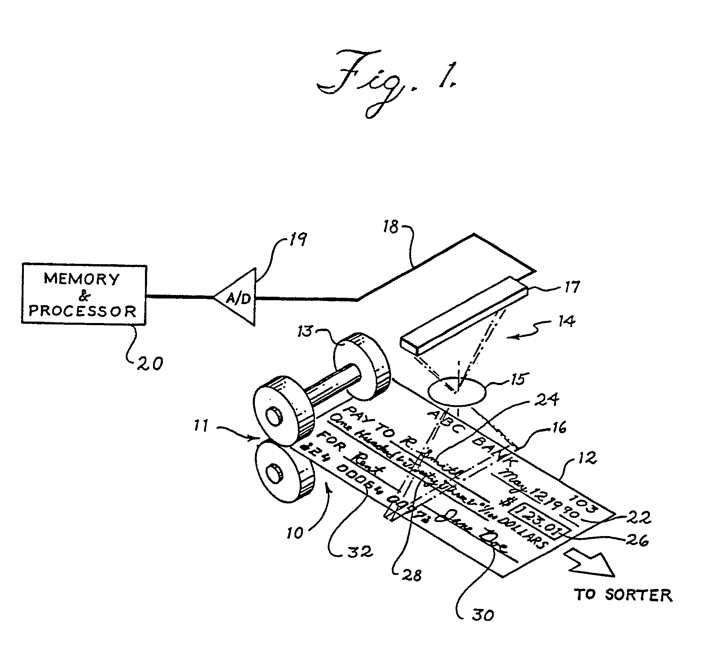

Fig. 1 illustrates an image capture system 10 within a document image processing system 11, such as IBM's Model 3890 XP ImagePlus High Performance Transaction System. Such a system typically uses a transport 13 to move a document 12 one at a time from an input hopper (not shown) sequentially past a plurality of other processing stations and finally into one of several output hoppers or pockets under program control, based usually upon the information content read from the document as it passes. This transport moves the document at a high speed (over 300 inches per second in a Model 3890 XP which allows the system to process 2400 documents per minute).

An optical system 14 including a focusing lens 15 uses an extended array 17 to capture an electrical representation of each line 16 of the document, based on either the black/white or gray characteristics of the document. While the resolution of the system depends on the design and components, one example divides each inch into 240 picture elements (pels or pixels) in each of the horizontal and vertical directions.

The array 17 is commercially available from various manufacturers, such as Reticon, and may include a row of charge coupled devices in which the impinging light on each sensor develops an electrical signal proportional to the amount of light.

The electrical signal for each device is sent on line 18, to an analog-to-digital converter 19, which together with thresholding, converts each pel into a digital representation, which is then stored in memory 20 for storage and/or further processing as desired. For further details of an image capture and processing system, see U.S. Patent 4,888,812 to Dinan et al., which is specifically incorporated herein by reference. In the preferred embodiment, a line of information at a time is processed through a plurality of A/D converters into storage.

The document 12 includes a variety of indicia, some of which may be printed and some may be handwritten. Other documents may include typewritten characters or those printed by machine. This indicia includes a date field 22, a payee line 24, an amount field 26 (sometimes referred to as a "courtesy amount field" which comprises numerals rather than words in most cases), a field 28 including the amount in words, a signature 30 and a MICR or OCR codeline 32.

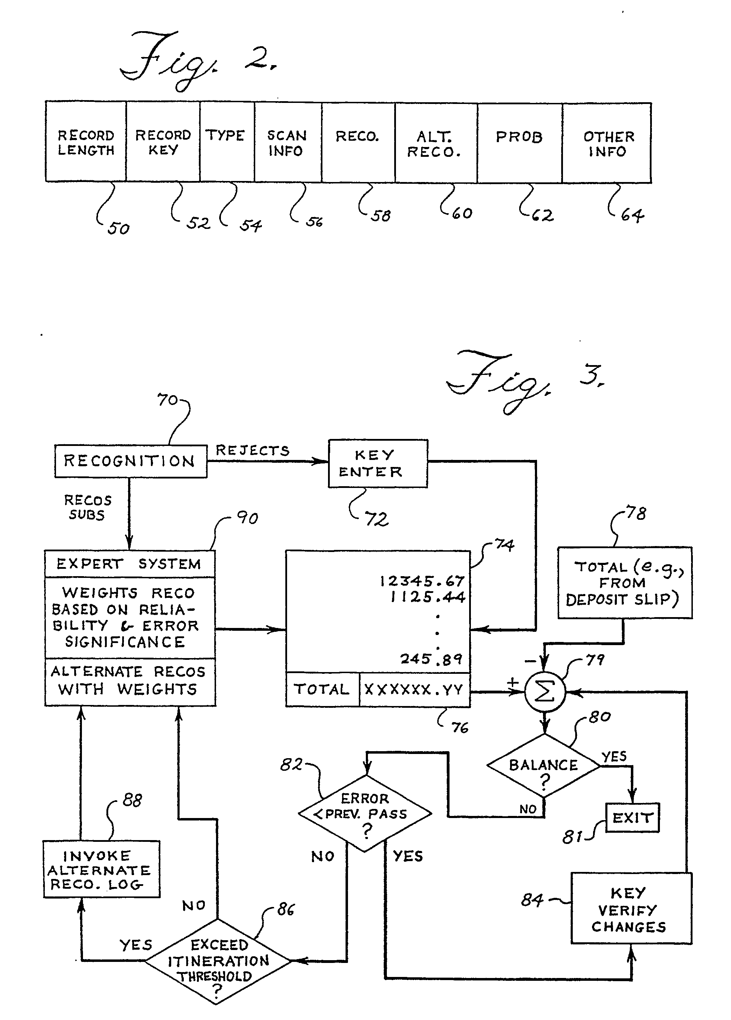

Fig. 2 depicts a record for each image record captured using the system of Fig. 1. Characters, either from the amount field and/or from the MICR line, are read and converted to recognized values which are stored in the header for the record. For each digit which is recognized, a confidence factor is also stored and a second choice for that character is also stored. That is, for example, a given character image is recognized using normal recognition algorithms, such as the OCR techniques described in the patent (US Patent Application Serial No. 491,895 concurrently filed) by T.A. Will. For example, if the character was recognized as a "7", it might have a .6 or 60% probability of being a "7", but if it is not a "7", it could be a "2". In this case, the "7" is stored in a location 58 associated with that character, the probability of .6 is stored in location 62, and the second choice of "2" is stored in a location of alternate character 60. In the same manner, each character on the document of interest is identified, along with the probability of successful recognition and the alternate character. Of course, a probability for a second choice would also be useful in some situations, as would a third choice if both the character recognized and the alternate might be incorrect.

Later, the image record and header will be used in processing the documents, for example, in balancing the individual documents against a summary document which is supposed to show the total of the amounts on the associated individual documents. This process, which is sometimes referred to as balancing, is described in more detail in concurrently filed patent (US Application Serial No. 492,461) by D. Lyke et al., which should be consulted for the further details on balancing. But, in summary fashion, if the total on the summary document is off by the amount of 5 from the total of the individual documents in the column where the "7" and "2" described in the preceding paragraph exist, then the probabilities could be scanned for a lower probability amount which has as the alternate value a difference of 5 (as the "2" is 5 different from the "7") and the probability of .6 might be the lowest probability of any recognition in the column for a recognition in that place value (for example, the hundreds of dollars field).

Of course, there are many ways for determining the confidence or probability for the individual entries in the recognition, and this invention deals more with using the probabilities that how those probabilities are generated.

For example, though, the probabilities might be based purely upon history, that the recognition of a "6" has historically been correct 90% of the time whereas the recognition of a "3" is historically subject to error more frequently. Similarly, the secondary value might be based upon purely historical analysis of a large number of attempts. But, it is more reliable if the original data could be used to simultaneously generate not only a recognition but also a confidence factor and a second choice. For example, then, in the recognition of MICR (for example, using an algorithm such as described in U.S. Patent 4,797,938 issued January 10, 1989 to T. A. Will.

Fig. 3 illustrates the logical flow of information in the present invention. At block 70, recognition of amounts is attempted, with those which cannot be recognized (called "rejects") passing to be key entered by an operator at block 72. The result is a listing of all of the individual items at block 74 and a total at block 76, which is then compared at block 79 with a total from a summary document stored at block 78.

The individual documents (listed in the block 74) might be checks being deposited, and the summary document (of block 78) the deposit slip. Alternatively, the documents could be a batch of checks from another financial institution and the summary a cash letter. In a similar fashion, records of charges from a merchant could be the individual documents and the summary document his batch total. While the total amount in block 78 could be recognized from this summary document, it also might be key entered.

At block 80, the system tests for balance, that is, does the sum of the individual amounts (block 76) equal the total (block 78) as evidenced by a zero difference at block 79. If the system is in balance, it exits at block 81, otherwise the next test at block 82, is whether the error is less on this iteration is less than it was on the previous pass with the same batch of data to be balanced (if there was a previous pass).

If the errors (differences) are decreasing, then at block 84 the operator can key verify the changes by calling up the image of the document in question and confirming that the revised amount is correct (or correct it if wrong), then retest the revised sum at block 79.

If the errors are not decreasing, then control passes back to an expert system at block 90 which uses logic, stored rules and the probabilities and alternate values to determine possible errors.

This logic, for example, determines which columns of the total are out of balance and by how much. For example, an error of 5 in the ten's of dollars might be an error in that column of substituting a "2" for a "7". An error of 1 in the hundreds column together with an error of 3 in the ten's column may be an error in the tens column which carries over.

At block 86, an iteration threshold is used (optionally) to use alternate recognition logic at block 88, only when a predetermined number of attempts to correct errors without it have failed to balance the group of documents.

Of course, many modifications and alterations can be made to the present invention with various advantages without departing from the spirit of this invention. Further, some features of the present invention could be used without corresponding use of other features. For example, the expert system (having stored rules based on experience of experts) is useful in finding the most likely errors, but not particularly necessary. Further, the use of probabilities is seen as an assist in the early finding and correcting those recognition values in which there is least confidence. Accordingly, the foregoing description should be considered as illustrative of the present invention and not in limitation thereof.

## Claims

1. A method of identifying and correcting reading errors in a character recognition process for reading numbers from a plurality of documents, the steps of the method comprising:

   identifying (70) a number read from each document and determining (90) a probability of correct reading of the number read from the document and a set of possible alternate numbers;

   comparing (80) a total of the numbers (76) read from a group of documents with an assumed total (78) of the numbers for the group of documents;

   if the total of the numbers (76) read does not equal the assumed total (78) of the numbers, identifying (90) one number which may have been improperly read;

   changing (90) the improperly read number to a member of the said set of alternate numbers;

   changing the total of the numbers to a revised total (76) for the group of documents using member of the said set of alternate numbers;

   repeating the steps of identifying a number which may have been improperly read and changing it and comparing the revised total (76) to the assumed total (78) if the revised total (76) does not match the assumed total.

2. A method including the steps of claim 1 further including:

   confirming (80) the change of an improperly read number.

3. A method including the steps of claim 2 where the step of confirming the change of an improperly read number includes the step of presenting an image of the number in question on a screen for an operator to indicate whether the number is correctly identified (84).

4. A method including the steps of claim 1 further including:

   using (90) the probability of incorrect reading to determine which number to change first.

5. The method of identifying and correcting reading errors of claim 4 wherein the step of using the probability of an incorrect reading includes the step of determining (90) which of several numbers has the greatest likelihood of incorrect reading.

6. A method including the steps of claim 1 further including:

   using the set of alternate numbers to determine (90) which number to change first, based on which member of the set of alternate numbers can be used to correct the total (76) to equal the assumed total (78).

7. A method of identifying and correcting errors as described in claim 1 where the steps of the method further include the step of counting (82) the number of changes which have been made and, based upon the number of documents in the group, determining that the assumed total (78) may have been in error when the total using the changed numbers does not equal the assumed total (76).

8. A method including the steps of claim 1 further including invoking (88) an alternative recognition logic to re-identify the said number read from each document and to redetermine the probability of correct reading of the said number read from each document and establish a new set of possible alternate numbers.

9. A method for identifying and correcting errors in recognition of a series of numbers, the steps of the method including;

storing in connection with a recognition (70) of each number or character, the primary recognition value, a secondary recognition, and a probability associated with the primary recognition value indicating the confidence of such primary recognition;

identifying (80) a possible error in a recognition;

locating (90) a possible error by locating a low confidence value; and

testing the secondary value associated with the low confidence value, by substituting the secondary value for the primary value, to determine whether the secondary value corrects the possible error in recognition.

10. A method of identifying and correcting errors in recognition including the steps identified in connection with claim 8, wherein the step of testing further includes visual verification (84) by an operator to confirm whether the secondary value is correct.

11. A method of identifying and correcting errors in recognition including the steps identified in connection with claim 8, wherein the step of testing further includes confirming whether the total of a series of numbers (78) equals the correct total (76) with the secondary value.

12. An apparatus for identifying and correcting errors in a recognition process comprising:

means (70) for recognizing a character on a document;

said means (70) including means (90) for testing the character to be identified against the character set and for determining which character in the character set is the best match, the second best match, and for determining a probability associated with the best match; and

means for storing in connection with character to be identified, the best match, the second best match and a probability of the best match being a correct identification.

*Fig. 1.*

MEMORY & PROCESSOR

TO SORTER

*Fig. 2.*

| RECORD LENGTH | RECORD KEY | TYPE | SCAN INFO | RECO. | ALT. RECO. | PROB | OTHER INFO |
|---|---|---|---|---|---|---|---|

50  52  54  56  58  60  62  64

*Fig. 3.*

RECOGNITION — 70

REJECTS → KEY ENTER — 72

RECOS SUBS

EXPERT SYSTEM — 90
WEIGHTS RECO BASED ON RELIABILITY & ERROR SIGNIFICANCE
ALTERNATE RECOS WITH WEIGHTS

12345.67
1125.44
.
.
.
245.89
TOTAL XXXXXX.YY — 74, 76

TOTAL (e.g., FROM DEPOSIT SLIP) — 78

$\Sigma$ — 79

BALANCE ? — 80
YES → EXIT — 81
NO

ERROR < PREV. PASS ? — 82
YES / NO

INVOKE ALTERNATE RECO. LOG — 88

EXCEED ITINERATION THRESHOLD ? — 86
YES / NO

KEY VERIFY CHANGES — 84